# EUROPEAN PATENT APPLICATION

(11) **EP 1 632 733 A2**
(43) Date of publication of application: **08.03.2006**
(21) Application number: 05018903.4
(22) Date of filing: 31.08.2005
(51) Int. Cl.: F25B 9/00, F25B 41/06

(54) **Refrigeration cycle apparatus and control method**

(30) Priority: 07.09.2004 JP 2004259237
(71) Applicant: MATSUSHITA ELECTRIC INDUSTRIAL CO., LTD., Kadoma-shi, Osaka 571-8501 (JP)
(72) Inventor: Okaza, Noriho, Ibaraki-shi, Osaka 567-0046 (JP); Nakatani, Kazuo, Neyagawa-shi, Osaka 572-0045 (JP); Mekata, Masato, Otsu-shi, Shiga 520-0846 (JP)
(74) Representative: Körfer, Thomas

(57) **Abstract**

It is an object of the present invention to overcome the problems concerning control in the adjustment of an opening of a decompressor, to reduce the apparatus in size, to enhance the reliability of the apparatus, and to enhance the COP. A refrigeration cycle apparatus which uses a refrigerant that can be brought into a supercritical state on a high pressure side, which includes at least a compressor 21, a radiator 22, an internal heat exchanger 27, a decompressor 23 and an evaporator 25, and which does not have a refrigerant amount adjusting means, the refrigeration cycle apparatus comprising discharge temperature detecting means 30 which detects a temperature of the refrigerant from the compressor 21 and the radiator 22, and a first decompressor operation device 31 which operates an opening of the decompressor 23 based on an output value of the discharge temperature detecting means 30.

## Description

### Field of the Invention

The present invention relates to a refrigeration cycle apparatus which uses a refrigerant which can be brought into a supercritical state on the high pressure side, and which does not have refrigerant amount adjusting means such as a receiver and an accumulator, but has an internal heat exchanger, and the invention also relates to a control method of the refrigeration cycle apparatus.

### Background Technique

Conventionally, as a refrigerant which is to be charged into a refrigeration cycle apparatus, hydrocarbon (flon) including fluorine atom is used. However, the flon has properties which destroy the ozone layer, and since the flon has short lifetime in the atmosphere and thus, the greenhouse effect thereof is high and this adversely affects the global warming, and the flon is not always a satisfactory refrigerant. Hence, instead of flon, there is proposed a refrigeration cycle apparatus which uses, as a refrigerant, carbon dioxide (CO2, hereinafter) or ethane whose ozone destroy coefficient is zero and whose global warming coefficient is extremely smaller than that of the flon.

A refrigerant such as the CO2 refrigerant and ethane has a low critical temperature, thus, when temperature which is higher than this critical temperature is utilized, the high pressure side (a compressor outlet to a radiator to a decompressor inlet) of the refrigeration cycle apparatus is in a supercritical state where condensation of the CO2 refrigerant is not caused. Further, as compared with the conventional refrigerant, the coefficient of performance (COP) of the refrigeration cycle apparatus is deteriorated. Therefore, in the case of a refrigeration cycle apparatus using CO2 refrigerant, means for enhancing the COP is important.

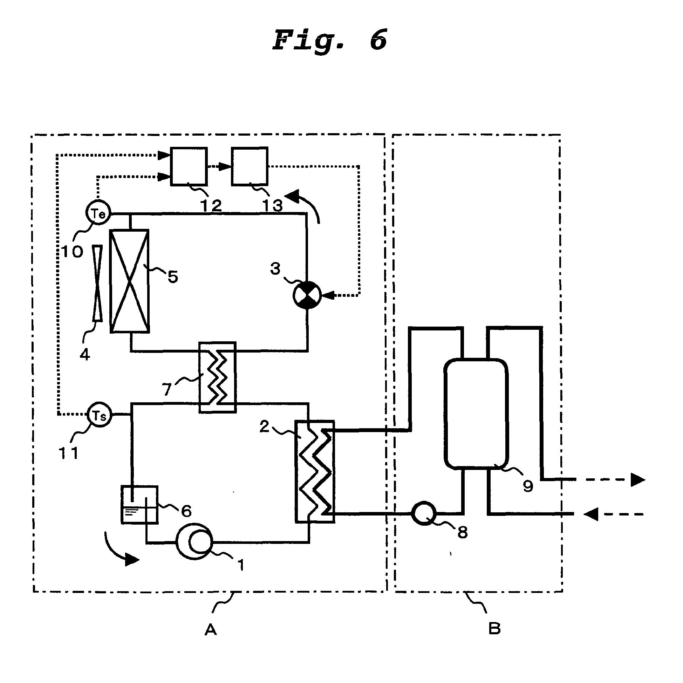

As such means, there is proposed a refrigeration cycle apparatus having an internal heat exchanger for enhancing the efficiency of the refrigeration cycle, and there is also proposed a control method of the refrigeration cycle apparatus (e.g., see patent document 1). Fig. 6 is a schematic block diagram of a conventional refrigeration cycle apparatus. The refrigeration cycle apparatus shown in Fig. 6 includes a refrigerant cycle circuit A and a boiler cycle circuit B. The refrigerant cycle circuit A comprises a compressor 1, a radiator 2, a decompressor 3 and an evaporator 5 which heat-exchanges with outside air sent by a fan 4. The boiler cycle circuit B comprises a feed pump 8, the radiator 2 and a boiler 9. The refrigeration cycle apparatus is a boiler machine in which a refrigerant is discharged from the compressor 1 in the radiator 2, water from the feed pump 8 is heated to hot water by the refrigerant, and the hot water is stored in the boiler 9.

An accumulator 6 is provided between the evaporator 5 and the compressor 1. Excessive refrigerant is stored in the accumulator 6 as liquid refrigerant. An internal heat exchanger 7 heat-exchanges refrigerant between the radiator 2 and the decompressor 3 and refrigerant between the evaporator 5 and the compressor 1. An evaporating temperature detection means 10 detects the temperature (evaporating temperature) between an inlet and an outlet of the evaporator 5. An overheat temperature detection means 11 detects the temperature (suction temperature) between the internal heat exchanger 7 and the compressor 1, or the temperature (evaporator outlet temperature) between the evaporator 5 and the internal heat exchanger 7. An overheat degree calculation means 12 calculates the overheat degree (suction temperature - evaporating temperature, or evaporator outlet temperature - evaporating temperature) detected by the evaporating temperature detection means 10 or the overheat temperature detection means 11. A decompressor operation device 13 calculates and operates an opening of the decompressor 3 based on the output value of the overheat degree calculation means 12.

According to such a refrigeration cycle apparatus, the decompressor operation device 13 adjusts the opening of the decompressor 3 by the suction overheat degree or the evaporator outlet overheat degree. Therefore, even if the refrigeration cycle apparatus uses the internal heat exchanger 7 in which the overheat degree is prone to be increased and the discharge temperature is prone to become high, it is possible to prevent the discharge temperature of the compressor 1 from abnormally rising, and to enhance the COP.

[Patent document 1] Japanese Patent Application Laid-open No.2000-205670

In the case of the above-described conventional technique, however, a receiver or an accumulator having relatively large capacity is required for storing the liquid refrigerant, and there is a problem that the apparatus is increased in size. Hence, the present inventors proposed a refrigeration cycle apparatus having no receiver or accumulator.

Even if the refrigeration cycle apparatus does not have the receiver or accumulator, it is possible in a normal operating state to prevent the discharge temperature of the compressor 1 from abnormally rising and to enhance the COP by adjusting the opening of the decompressor by means of the suction overheat degree or evaporator outlet overheat degree as proposed in the conventional technique. However, when the temperature of fluid (e.g., outside air temperature) which is to be heat-exchanged with refrigerant by the evaporator 5, or the temperature of fluid (e.g., entering water temperature) which is to be heat-exchanged with refrigerant by the radiator 2 is low, since the amount of liquid refrigerant which returns to the evaporator 5 or compressor 1 is large, the suction overheat degree or the evaporator outlet overheat degree can not be detected almost at all, and there is a problem that the opening of the decompressor 3 can not be adjusted sufficiently.

Especially in the case of a refrigeration cycle apparatus having the internal heat exchanger 7, since the discharge temperature is prone to rise, there is a problem that if the opening of the decompressor 3 is not adjusted sufficiently, lubricant oil in the compressor and material of a motor are deteriorated due to high temperature, and the reliability of the refrigeration cycle apparatus is deteriorated.

### Summary of the Invention

Hence, to solve the above problems, in a refrigeration cycle apparatus which does not have a refrigerant amount adjusting means such as a receiver and an accumulator, but which has an internal heat exchanger, it is an object of the present invention to overcome the problems concerning control in the adjustment of an opening of a decompressor, to reduce the apparatus in size, to enhance the reliability of the apparatus, and to enhance the COP.

According to a first aspect, there is provided a refrigeration cycle apparatus which uses a refrigerant that can be brought into a supercritical state on a high pressure side, which includes at least a compressor, a radiator, an internal heat exchanger, a decompressor and an evaporator, and which does not have a refrigerant amount adjusting means, the refrigeration cycle apparatus comprising discharge temperature detecting means which detects a temperature of the refrigerant from the compressor to the radiator, and a first decompressor operation device which operates an opening of the decompressor based on an output value of the discharge temperature detecting means.

According to the first aspect, since the opening of the decompressor is adjusted based on the discharge temperature, even when the suction overheat degree or evaporator outlet overheat degree can hardly be detected, the refrigeration cycle apparatus can be operated efficiently. Further, since the opening of the decompressor is adjusted by directly detecting the discharge temperature, even if the refrigeration cycle apparatus includes the internal heat exchanger, the discharge temperature does not rise excessively, the problem of reliability is not caused, and the apparatus can be reduced in size.

A second aspect of the invention provides a refrigeration cycle apparatus which uses a refrigerant that can be brought into a supercritical state on a high pressure side, which includes at least a compressor, a radiator, an internal heat exchanger, a decompressor and an evaporator, and which does not have a refrigerant amount adjusting means, the refrigeration cycle apparatus comprising discharge temperature detecting means which detects a temperature of the refrigerant from the compressor to the radiator, overheat degree calculation means which calculates a refrigerant overheat degree at an inlet of the compressor or an outlet of the evaporator, selecting means for selecting one of an output value of the discharge temperature detecting means and an output value of the overheat degree calculation means under a predetermined condition, and a second decompressor operation device which operates an opening of the decompressor based on an output value of the selecting means.

According to the second aspect, when the suction overheat degree or evaporator outlet overheat degree can hardly be detected, the opening of the decompressor is adjusted based on the discharge temperature. Thus, the refrigeration cycle apparatus can be operated efficiently. Further, since the opening of the decompressor is adjusted by directly detecting the discharge temperature, even if the refrigeration cycle apparatus includes the internal heat exchanger, the discharge temperature does not rise excessively, the problem of reliability is not caused, and the apparatus can be reduced in size.

According to a third aspect of the invention, in the refrigeration cycle apparatus of the second aspect, the selecting means selects one of an output value of the discharge temperature detecting means and an output value of the overheat degree calculation means in accordance with a temperature of a fluid which is heat-exchanged with the refrigerant by the evaporator.

According to the third aspect, even when the suction overheat degree or evaporator outlet overheat degree can hardly be detected because the fluid temperature which is heat-exchanged by the evaporator is low, since the opening of the decompressor is adjusted based on the discharge temperature, the refrigeration cycle apparatus can be operated efficiently. Further, since the opening of the decompressor is adjusted by directly detecting the discharge temperature, even if the refrigeration cycle apparatus includes the internal heat exchanger, the discharge temperature does not rise excessively, the problem of reliability is not caused, and the apparatus can be reduced in size.

According to a fourth aspect of the invention, in the refrigeration cycle apparatus of the second aspect, the selecting means selects one of an output value of the discharge temperature detecting means and an output value of the overheat degree calculation means in accordance with a temperature of a fluid which is heat-exchanged with the refrigerant by the radiator. Further, since the opening of the decompressor is adjusted by directly detecting the discharge temperature, even if the refrigeration cycle apparatus includes the internal heat exchanger, the discharge temperature does not rise excessively, the problem of reliability is not caused, and the apparatus can be reduced in size.

According to a fifth aspect of the invention, in the refrigeration cycle apparatus of the first or second aspect, the internal heat exchanger cools a refrigerant between an outlet of the radiator and an inlet of the decompressor by a refrigerant between an outlet of the evaporator and an inlet of the compressor.

According to the fifth aspect, since the opening of the decompressor is adjusted based on the discharge temperature, even when the suction overheat degree or evaporator outlet overheat degree can hardly be detected, the refrigeration cycle apparatus can be operated efficiently. Further, since the opening of the decompressor is adjusted by directly detecting the discharge temperature, even if the refrigeration cycle apparatus does not include the refrigerant amount adjusting means, the discharge temperature does not rise excessively, the problem of reliability is not caused, and the apparatus can be reduced in size.

According to a sixth aspect of the invention, in the refrigeration cycle apparatus of the first or second aspect, the internal heat exchanger branches a portion of the refrigerant which flows out from the radiator to decompress the same by an auxiliary decompressor, and a refrigerant between the outlet of the radiator and the inlet of the decompressor is cooled by the decompressed refrigerant.

According to the sixth aspect, since the opening of the decompressor is adjusted based on the discharge temperature, even when the suction overheat degree or evaporator outlet overheat degree can hardly be detected, the refrigeration cycle apparatus can be operated efficiently. Further, since the opening of the decompressor is adjusted by directly detecting the discharge temperature, even if the refrigeration cycle apparatus does not include the refrigerant amount adjusting means, the discharge temperature does not rise excessively, the problem of reliability is not caused, and the apparatus can be reduced in size.

A seventh aspect of the invention provides a control method of a refrigeration cycle apparatus which uses a refrigerant that can be brought into a supercritical state on a high pressure side, which includes at least a compressor, a radiator, an internal heat exchanger, a decompressor and an evaporator, and which does not have a refrigerant amount adjusting means, wherein an opening of the decompressor is adjusted based on a temperature of the refrigerant from the compressor to the radiator.

According to the seventh aspect, even when the suction overheat degree or evaporator outlet overheat degree can hardly be detected, the refrigeration cycle apparatus can be operated efficiently. Further, since the opening of the decompressor is adjusted by directly detecting the discharge temperature, even if the refrigeration cycle apparatus includes the internal heat exchanger, the discharge temperature does not rise excessively, the problem of reliability is not caused, and the apparatus can be reduced in size.

An eighth aspect of the invention provides a control method of a refrigeration cycle apparatus which uses a refrigerant that can be brought into a supercritical state on a high pressure side, which includes at least a compressor, a radiator, an internal heat exchanger, a decompressor and an evaporator, and which does not have a refrigerant amount adjusting means, wherein one of a refrigerant temperature value from the compressor to the radiator and a refrigerant overheat degree value at an inlet of the compressor or an outlet of the evaporator is selected, an opening of the decompressor is adjusted based on the selected value.

According to the eighth aspect, even when the suction overheat degree or evaporator outlet overheat degree can hardly be detected, since the opening of the decompressor is adjusted based on the discharge temperature, the refrigeration cycle apparatus can be operated efficiently. Further, since the opening of the decompressor is adjusted by directly detecting the discharge temperature, even if the refrigeration cycle apparatus includes the internal heat exchanger, the discharge temperature does not rise excessively, the problem of reliability is not caused, and the apparatus can be reduced in size.

According to a ninth aspect, in the control method of the refrigeration cycle apparatus of the eighth aspect, one of the refrigerant temperature value and the refrigerant overheat degree value is selected in accordance with a fluid temperature which is heat-exchanged with the refrigerant by the evaporator.

According to the ninth aspect, even when the suction overheat degree or evaporator outlet overheat degree can hardly be detected because the fluid temperature which is heat-exchanged by the evaporator is low, since the opening of the decompressor is adjusted based on the discharge temperature, the refrigeration cycle apparatus can be operated efficiently. Further, since the opening of the decompressor is adjusted by directly detecting the discharge temperature, even if the refrigeration cycle apparatus includes the internal heat exchanger, the discharge temperature does not rise excessively, the problem of reliability is not caused, and the apparatus can be reduced in size.

According to a tenth aspect, in the control method of the refrigeration cycle apparatus of the eighth aspect, one of the refrigerant temperature value and the refrigerant overheat degree value is selected in accordance with a fluid temperature which is heat-exchanged with the refrigerant by the radiator.

According to the tenth aspect, even when the suction overheat degree or evaporator outlet overheat degree can hardly be detected because the fluid temperature which is heat-exchanged by the radiator is low, since the opening of the decompressor is adjusted based on the discharge temperature, the refrigeration cycle apparatus can be operated efficiently. Further, since the opening of the decompressor is adjusted by directly detecting the discharge temperature, even if the refrigeration cycle apparatus includes the internal heat exchanger, the discharge temperature does not rise excessively, the problem of reliability is not caused, and the apparatus can be reduced in size.

According to the refrigeration cycle apparatus and the control method thereof of the present invention, in the refrigeration cycle apparatus which does not have a refrigerant amount adjusting means such as a receiver and an accumulator, but which has an internal heat exchanger, it is possible to reduce the apparatus in size, to enhance the reliability of the apparatus, and to enhance the COP by adjusting an opening of a decompressor based on the discharge temperature.

### Best Mode for Carrying Out the Invention

### (Embodiment 1)

Embodiments of the present invention will be explained with reference to the drawings. A boiler machine will be explained while taking the case of a boiler machine, but the invention is not limited to the boiler machine of the embodiments, and the boiler machine may be an air conditioner or the like.

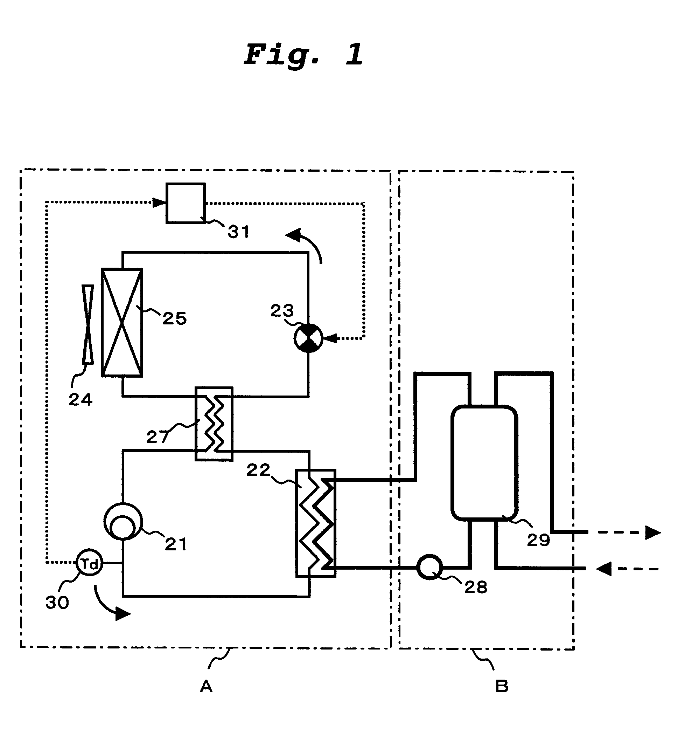

Fig. 1 is a schematic block diagram of a refrigeration cycle apparatus according to an embodiment 1 of the present invention. The refrigeration cycle apparatus shown in Fig. 1 includes a refrigerant circuit A and a fluid circuit B. The refrigerant circuit A comprises a compressor 21, a refrigerant flow path of a radiator 22 as a boiler heat exchanger, a high pressure side refrigerant flow path of an internal heat exchanger 27, a decompressor 23, an evaporator 25, and a low pressure side refrigerant flow path of the internal heat exchanger 27. The fluid circuit B comprises a feed pump 28, a fluid flow path of the radiator 22 and a boiler 29.

The internal heat exchanger 27 heat-exchanges refrigerant between the decompressor 23 and an outlet of the radiator 22 and refrigerant between an outlet of the evaporator 25 and an inlet of the compressor 21. An air-blow fan 24 sends outside air to the evaporator 25. A discharge temperature detection means 30 detects a temperature (discharge temperature) between an outlet of the compressor 21 and an inlet of the radiator 22. A first decompressor operation device 31 calculates and operates an opening of the decompressor 23 based on an output value of the discharge temperature detection means 30.

The action of the refrigeration cycle apparatus having the above-described structure at the time of operation thereof will be explained.

In the fluid circuit B, fluid (e.g. , water) is sent from a bottom of the boiler 29 to the fluid flow path of the radiator 22 by the feed pump 28. The fluid is heated by refrigerant which flows through the refrigerant flow path of the radiator 22, and becomes high temperature fluid (e.g., hot water), and the high temperature fluid is stored from a top of the boiler 29.

On the other hand, in the refrigerant circuit A, CO2 refrigerant which is refrigerant is compressed to a pressure exceeding a critical pressure. The compressed refrigerant is brought into a high temperature and high pressure state, and the refrigerant dissipates heat to fluid (e.g. , water) flowing through the fluid flow path of the radiator 22 when the refrigerant flows through the refrigerant flow path of the radiator 22, and the refrigerant is cooled. The refrigerant is supplied to a high pressure side refrigerant flow path of the internal heat exchanger 27, and is cooled by a low temperature refrigerant flowing through a low pressure side refrigerant flow path of the internal heat exchanger 27. Thereafter, the refrigerant is decompressed by the decompressor 23 and is brought into a low temperature and low pressure gas/liquid two phase state, and is supplied to the evaporator 25. In the evaporator 25, the refrigerant is heated by outside air which is sent by the air-blow fan 24, and is brought into the gas/liquid two phase state or gaseous state. The refrigerant which flows out from the evaporator 25 is further heated by the low pressure side refrigerant flow path of the internal heat exchanger 27, and is again sucked into the compressor 21.

Here, when the temperature of fluid (e.g., outside air temperature) which is to be heat-exchanged with refrigerant by the evaporator 25 or the temperature of fluid (e.g. , entering water temperature) which is to be heat-exchanged with refrigerant by the radiator 22 becomes low, the amount of liquid refrigerant which returns to the evaporator 25 or compressor 21 is increased. Therefore, latent heat variation occupies most of state variation of refrigerant by the evaporator 25 or internal heat exchanger 27. A difference between the suction temperature or the evaporator outlet temperature and the evaporating temperature can not be obtained almost at all even with a refrigeration cycle apparatus having the internal heat exchanger 27 which can obtain such a difference relatively easily. Thus, since it becomes difficult to calculate the suction overheat degree of the compressor 21 or the outlet overheat degree of the evaporator 25, it is difficult to optimally adjust the opening of the decompressor 23 based on the suction overheat degree or evaporator outlet overheat degree.

In the refrigeration cycle apparatus of this embodiment, however, since the opening of the decompressor 23 is adjusted based on the discharge temperature detected by the discharge temperature detection means 30 by means of the first decompressor operation device 31, even if the suction overheat degree or evaporator outlet overheat degree can hardly be detected, since the opening of the decompressor is optimally adjusted, the refrigeration cycle apparatus can be operated efficiently. Since the opening of the decompressor 23 is adjusted by directly detecting the discharge temperature of the compressor 21, even if the refrigeration cycle apparatus includes the internal heat exchanger 27, the discharge temperature does not rise excessively, and the problem of reliability is not caused.

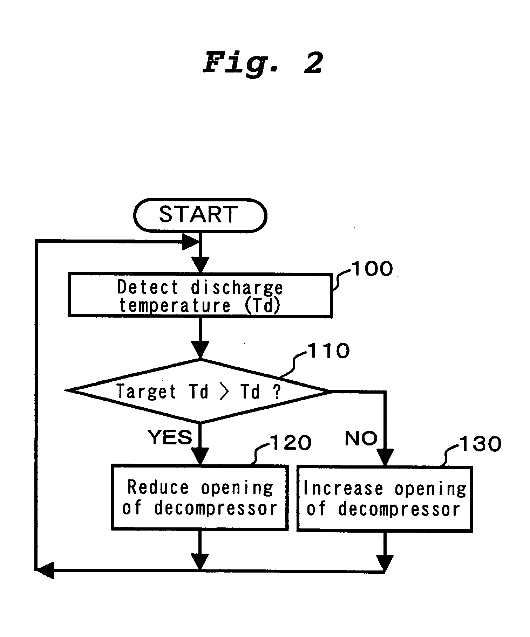

Next, control performed by the first decompressor operation device 31 as a concrete operating method of the decompressor 23 will be explained based on the flowchart shown in Fig. 2.

When the refrigeration cycle apparatus is operated, a detection value (discharge temperature Td) from the discharge temperature detection means 30 is taken in (step 100) . A target discharge temperature (target Td) which is previously stored in a ROM or the like and a discharge temperature taken in the step 100 are compared with each other (step 110). If the discharge temperature is lower than a target discharge temperature, the opening of the decompressor 23 is reduced (step 120), the amount of refrigerant which passes through the decompressor 23 is reduced, and the suction overheat degree, the evaporator outlet temperature, or the discharge temperature is increased. If the discharge temperature is higher than the target discharge temperature on the contrary, the opening of the decompressor 23 is increased (step 130), the amount of refrigerant which passes through the decompressor 23 is increased, and the suction overheat degree, the evaporator outlet temperature, or the discharge temperature is lowered. After these steps, the procedure is returned to step 100, the operations from step 100 to step 130 are repeated, thereby adjusting the opening of the decompressor 23 based on the discharge temperature.

According to such a control method of the refrigeration cycle apparatus, since the target discharge temperature is previously determined from the refrigeration cycle state which becomes the optimal suction overheat degree or the evaporator outlet temperature, even when the outside air temperature or entering water temperature is low and the suction overheat degree or evaporator outlet overheat degree can not be detected almost at all, the opening of the decompressor can be adjusted optimally based on the discharge temperature, and the refrigeration cycle apparatus can be operated efficiently. Since the opening of the decompressor 23 is adjusted by directly detecting the discharge temperature of the compressor 21, even if the refrigeration cycle apparatus includes the internal heat exchanger 27, the discharge temperature does not rise excessively, and the problem of reliability is not caused.

The relation between the discharge temperature and the optimal suction overheat degree or evaporator outlet temperature is susceptible to outside air temperature and entering water temperature. Therefore, the target discharge temperature may be corrected by the outside air temperature or entering water temperature.

### (Embodiment 2)

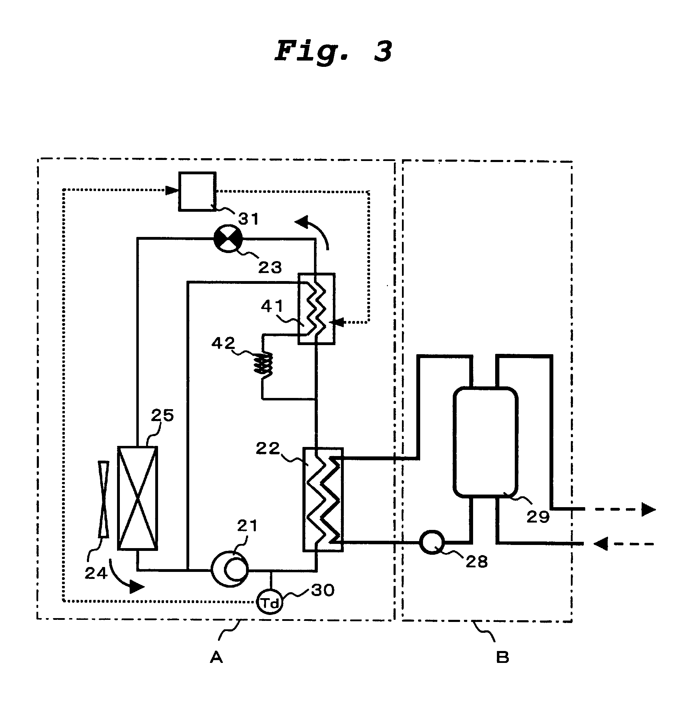

Fig. 3 is a schematic block diagram showing a boiler apparatus which is a refrigeration cycle apparatus according to an embodiment 2 of the invention. In Fig. 3, the same constituent elements as those shown in Fig. 1 are designated with the same numbers as those of Fig. 1, and explanation thereof will be omitted. According to the refrigeration cycle apparatus shown in Fig. 3, an internal heat exchanger 41 cools a refrigerant between the outlet of the radiator 22 and the decompressor 23 by means of a refrigerant which is branched off from the outlet of the radiator 22, and which flows into a circuit connected to the inlet of the compressor 21 through an auxiliary decompressor 42.

The action of the refrigeration cycle apparatus having such a structure at the time of operation thereof will be explained.

In the refrigerant circuit A, CO2 refrigerant which is a refrigerant is compressed to a pressure exceeding a critical pressure. The compressed refrigerant is brought into a high temperature and high pressure state, and dissipates heat to fluid (e.g. , water) flowing through the fluid flow path of the radiator 22 when the refrigerant flows through the refrigerant flow path of the radiator 22, and the refrigerant is cooled. Most of refrigerant which flows out from the radiator 22 is supplied to a high pressure side refrigerant flow path of the internal heat exchanger 41, and the refrigerant is cooled by a low temperature refrigerant which flows through a low pressure side refrigerant flow path of the internal heat exchanger 41.

Thereafter, the refrigerant is decompressed by the decompressor 23 and is brought into a low temperature and low pressure gas/liquid two phase state, and is supplied to the evaporator 25. In the evaporator 25 , the refrigerant is heated by outside air which is sent by the air-blow fan 24, and is brought into the gas/liquid two phase state or gaseous state. A portion of the refrigerant which flows out from the radiator 22 is decompressed by the auxiliary decompressor 42 and is brought into low temperature and low pressure gas/liquid two phase state, and the portion of refrigerant is supplied to the low pressure side refrigerant flow path of the internal heat exchanger 41. This low temperature and low pressure refrigerant cools, in the internal heat exchanger 41, a relatively high temperature refrigerant which flows through the high pressure side refrigerant flow path and then, merges with a refrigerant which flows out from the evaporator 25. Then, the refrigerant is again sucked into the compressor 21.

A concrete operating method of the decompressor 23 of this embodiment is the same as that of the embodiment 1 and thus, explanation thereof will be omitted. According to such a refrigeration cycle apparatus and control method, since the target discharge temperature is previously determined from the refrigeration cycle state which becomes the optimal suction overheat degree or the evaporator outlet temperature, even when the outside air temperature or entering water temperature is low and the suction overheat degree or evaporator outlet overheat degree can not be detected almost at all, the opening of the decompressor can be adjusted optimally based on the discharge temperature, and the refrigeration cycle apparatus can be operated efficiently. Since the opening of the decompressor 23 is adjusted by directly detecting the discharge temperature of the compressor 21, even if the refrigeration cycle apparatus includes the internal heat exchanger 41, the discharge temperature does not rise excessively, and the problem of reliability is not caused.

The auxiliary decompressor 42 may be a decompressor such as a capillary tube whose decompression amount is fixed, or may be a decompressor such as an electric expansion valve whose decompression amount is variable.

### (Embodiment 3)

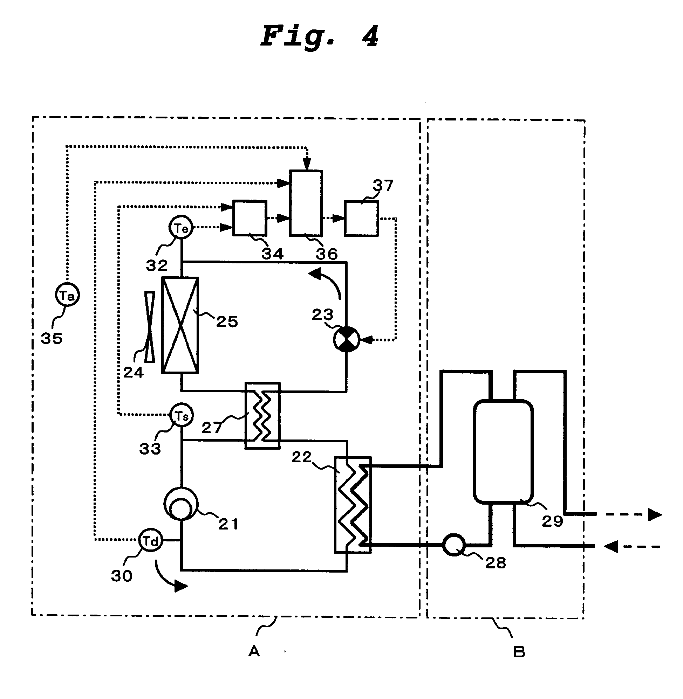

Fig. 4 is a schematic block diagram showing a boiler apparatus which is a refrigeration cycle apparatus according to an embodiment 3 of the invention. In Fig. 4, the same constituent elements as those shown in Fig. 1 are designated with the same numbers as those of Fig. 1, and explanation thereof will be omitted. In the refrigeration cycle apparatus shown in Fig. 4, an evaporating temperature detection means 32 detects a temperature (evaporating temperature) between the inlet and the outlet of the evaporator 25. An overheat temperature detection means 33 detects a temperature (suction temperature) between the internal heat exchanger 27 and the compressor 21 or a temperature (evaporator outlet temperature) between the evaporator 25 and the internal heat exchanger 27. An overheat degree calculation means 34 calculates an overheat degree (suction temperature - evaporating temperature, or evaporator outlet temperature - evaporating temperature) from values detected by the evaporating temperature detection means 32 and the overheat temperature detection means 33.

A fluid temperature detection means 35 detects a temperature of fluid (e.g., outside air temperature) which heat-exchanges with a refrigerant in the evaporator 25. A selecting means 36 selects one of an overheat degree calculated by the overheat degree calculation means 34 and a discharge temperature detected by the discharge temperature detecting means in accordance with an outside air temperature detected by the fluid temperature detection means 35. A second decompressor operation device 37 calculates and operates the opening of the decompressor 23 based on the value selected by the selecting means 36.

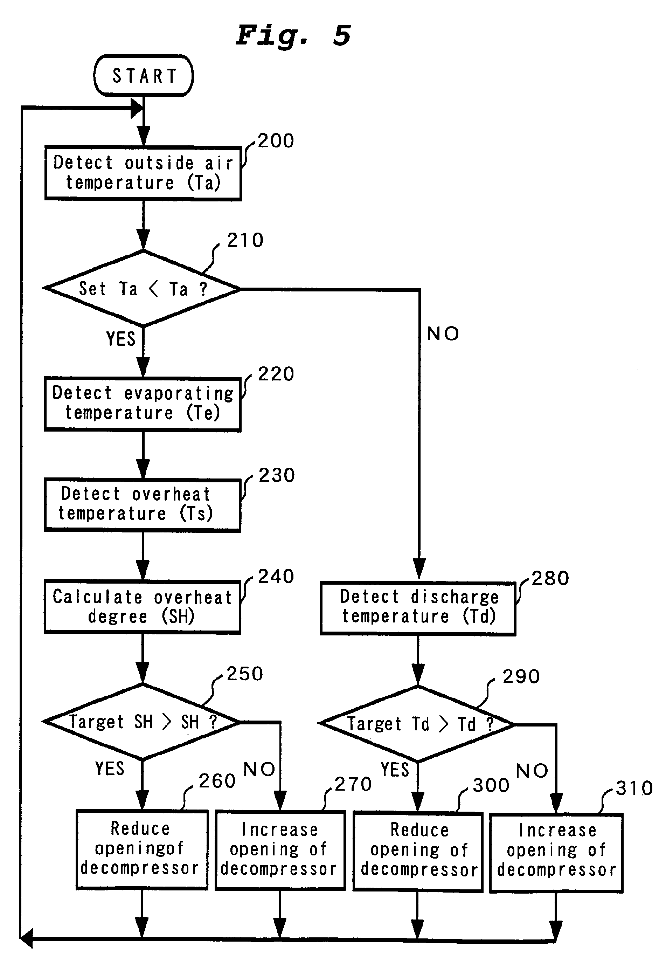

Since the action of the refrigeration cycle apparatus having the above-described structure at the time of operation thereof is the same as that of the embodiment 1, explanation thereof will be omitted. Control performed by the second decompressor operation device 37 as a concrete operating method of the decompressor 23 will be explained based on the flowchart shown in Fig. 5.

At the time of operation of the refrigeration cycle apparatus, a detection value (outside air temperature Ta) from the fluid temperature detection means 35 is taken in (step 200) . A set outside air temperature (set Ta) which is previously stored in a ROM or the like and the outside air temperature taken in the step 200 are compared with each other (step 210) . If the outside air temperature is higher than the set outside air temperature, since the suction overheat degree or evaporator outlet overheat degree can be calculated, the selecting means 36 selects the opening adjustment of the decompressor 23 based on the overheat degree. That is, if the outside air temperature is higher than the set outside air temperature, a detection value (evaporating temperature Ta) from the evaporating temperature detection means 32 is taken in (step 220) and then, a detection value (suction temperature or evaporator outlet temperature) from the overheat temperature detection means 33 is taken in (step 230).

Then, the overheat degree calculation means 34 calculates an overheat degree (SH) (suction temperature - evaporating temperature, or evaporator outlet temperature - evaporating temperature) (step 240). A target overheat degree (target SH) which is previously stored in the ROM or the like and the overheat degree calculated in step 240 are compared with each other (step 250). If the overheat degree is lower than the target overheat degree, the opening of the decompressor 23 is reduced (step 260), the amount of refrigerant which passes through the decompressor 23 is reduced, and the suction overheat degree or evaporator outlet overheat degree is increased. If the overheat degree is higher than the target overheat degree on the contrary, the opening of the decompressor 23 is increased (step 270), the amount of refrigerant which passes through the decompressor 23 is increased, and the suction overheat degree or evaporator outlet overheat degree is reduced.

On the other hand if it is determined in step 210 that the outside air temperature is lower than the set outside air temperature, since the amount of liquid refrigerant which returns to the evaporator 25 or compressor 21 is increased, it is difficult to calculate the suction overheat degree or evaporator outlet overheat degree. Therefore, the selecting means 36 selects the opening adjustment of the decompressor 23 based on the discharge temperature. That is, the detection value (discharge temperature Td) from the discharge temperature detection means 30 is taken in (step 280). The target discharge temperature (target Td) which is previously stored in the ROM or the like and the discharge temperature taken in step 280 are compared with each other (step 290). If the discharge temperature is lower than the target discharge temperature, the opening of the decompressor 23 is reduced (step 300), the amount of refrigerant which passes through the decompressor 23 is reduced, and the suction overheat degree, the evaporator outlet overheat degree and the discharge temperature are increased.

If the discharge temperature is higher than the target discharge temperature on the contrary, the opening of the decompressor 23 is increased (step 310), the amount of refrigerant which passes through the decompressor 23 is increased, and the suction overheat degree and the evaporator outlet overheat degree are reduced, and the discharge temperature is reduced. After these steps, the procedure is returned to step 200, and operations from step 200 to step 310 are repeated, one of the opening adjustment based on the overheat degree and the opening adjustment based on the discharge temperature is selected in accordance with the outside air temperature, and the opening of the decompressor 23 can be adjusted.

According to the control method of the refrigeration cycle apparatus, when the outside air temperature or entering water temperature is high and the overheat degree can be calculated, the opening of the evaporator can be adjusted optimally based on the suction overheat degree or evaporator outlet overheat degree. Also when the outside air temperature or entering water temperature is low and it is difficult to calculate the overheat degree, since the target discharge temperature is previously set from the refrigeration cycle state which becomes the optimal suction overheat degree or the evaporator outlet temperature, the opening of the decompressor can be adjusted optimally based on the discharge temperature, and the refrigeration cycle apparatus can be operated efficiently. Since the opening of the decompressor 23 is adjusted by directly detecting the discharge temperature of the compressor 21, even if the refrigeration cycle apparatus includes the internal heat exchanger 27, the discharge temperature does not rise excessively, and the problem of reliability is not caused.

In this embodiment, one of the opening adjustment based on the overheat degree and the opening adjustment based on the discharge temperature is selected in accordance with the outside air temperature, but even if the selection is made in accordance with the temperature of fluid (e.g., entering water temperature) which is to be heat-exchanged with a refrigerant by the radiator 22, the same effect can be obtained. The structure of the internal heat exchanger of the embodiment 3 is the same as that of the embodiment 1, but the embodiment 3 employs the structure explained in the embodiment 2, the same effect can be obtained.

According to the refrigeration cycle apparatus and the control method of the present invention, a refrigerant which can be brought into the supercritical state on the high pressure side (e.g., R32, carbon dioxide, ethane, ethylene, nitric oxide, and mixture refrigerant including these elements) is used, and in a boiler, an air conditioner and a vehicular air conditioner which do not have a refrigerant amount adjusting means such as a receiver and an accumulator, but which include an internal heat exchanger, it is possible to reduce the size thereof, and to enhance the COP without deteriorating the reliability.

### Brief Description of the Drawings

Fig. 1 is a block diagram showing a refrigeration cycle apparatus according to an embodiment 1 of the present invention;
Fig. 2 is a flowchart showing a control method of the refrigeration cycle apparatus;
Fig. 3 is a block diagram showing a refrigeration cycle apparatus according to an embodiment 2 of the invention;
Fig. 4 is a block diagram showing a refrigeration cycle apparatus according to a third embodiment of the invention;
Fig. 5 is a flowchart showing a control method of the refrigeration cycle apparatus; and
Fig. 6 is a block diagram showing a conventional refrigeration cycle apparatus.

## Claims

1. A refrigeration cycle apparatus which uses a refrigerant that can be brought into a supercritical state on a high pressure side, which includes at least a compressor, a radiator, an internal heat exchanger, a decompressor and an evaporator, and which does not have a refrigerant amount adjusting means, said refrigeration cycle apparatus comprising discharge temperature detecting means which detects a temperature of said refrigerant from said compressor to said radiator, and a first decompressor operation device which operates an opening of said decompressor based on an output value of said discharge temperature detecting means.

2. A refrigeration cycle apparatus which uses a refrigerant that can be brought into a supercritical state on a high pressure side, which includes at least a compressor, a radiator, an internal heat exchanger, a decompressor and an evaporator, and which does not have a refrigerant amount adjusting means, said refrigeration cycle apparatus comprising discharge temperature detecting means which detects a temperature of said refrigerant from said compressor to said radiator, overheat degree calculation means which calculates a refrigerant overheat degree at an inlet of said compressor or an outlet of said evaporator, selecting means for selecting one of an output value of said discharge temperature detecting means and an output value of said overheat degree calculation means under a predetermined condition, and a second decompressor operation device which operates an opening of said decompressor based on an output value of said selecting means.

3. The refrigeration cycle apparatus according to claim 2, wherein said selecting means selects one of the output value of said discharge temperature detecting means and the output value of said overheat degree calculation means in accordance with a temperature of a fluid which is heat-exchanged with said refrigerant by said evaporator.

4. The refrigeration cycle apparatus according to claim 2, wherein said selecting means selects one of the output value of said discharge temperature detecting means and the output value of said overheat degree calculation means in accordance with a temperature of a fluid which is heat-exchanged with said refrigerant by said radiator.

5. The refrigeration cycle apparatus according to claim 1 or 2, wherein said internal heat exchanger cools a refrigerant between the outlet of said radiator and the inlet of said decompressor by a refrigerant between an outlet of said evaporator and an inlet of said compressor.

6. The refrigeration cycle apparatus according to claim 1 or 2, wherein said internal heat exchanger branches a portion of the refrigerant which flows out from said radiator to decompress the same by an auxiliary decompressor, and a refrigerant between the outlet of said radiator and the inlet of said decompressor is cooled by said decompressed refrigerant.

7. A control method of a refrigeration cycle apparatus which uses a refrigerant that can be brought into a supercritical state on a high pressure side, which includes at least a compressor, a radiator, an internal heat exchanger, a decompressor and an evaporator, and which does not have a refrigerant amount adjusting means, wherein an opening of said decompressor is adjusted based on a temperature of the refrigerant from said compressor to said radiator.

8. A control method of a refrigeration cycle apparatus which uses a refrigerant that can be brought into a supercritical state on a high pressure side, which includes at least a compressor, a radiator, an internal heat exchanger, a decompressor and an evaporator, and which does not have a refrigerant amount adjusting means, wherein one of a refrigerant temperature from said compressor to said radiator and a refrigerant overheat degree value at an inlet of said compressor or an outlet of said evaporator is selected, an opening of said decompressor is adjusted based on the selected value.

9. The control method of the refrigeration cycle apparatus according to claim 8, wherein one of the refrigerant temperature and the refrigerant overheat degree value is selected in accordance with a fluid temperature which is heat-exchanged with said refrigerant by said evaporator.

10. The control method of the refrigeration cycle apparatus according to claim 8, wherein one of the refrigerant temperature and the refrigerant overheat degree value is selected in accordance with a fluid temperature which is heat-exchanged with said refrigerant by said radiator.
